# EUROPÄISCHE PATENTSCHRIFT

(11) **EP 0 392 289 B1**
(45) Veröffentlichungstag und Bekanntmachung des Hinweises auf die Patenterteilung: **08.03.1995**
(21) Anmeldenummer: 90106122.6
(22) Anmeldetag: 30.03.1990
(51) Int. Cl.: B65H 67/06

(54) **Verfahren und Vorrichtung zum Speichern und Vereinzeln von Spulhülsen**
Method and apparatus for storing and isolating bobbin tubes
Procédé et dispositif pour emmagasiner et isoler des tubes de bobine

(30) Priorität: 12.04.1989 DE 3912026
(43) Veröffentlichungstag der Anmeldung: 17.10.1990
(73) Patentinhaber: Rieter Ingolstadt Spinnereimaschinenbau AG, 85055 Ingolstadt (DE)
(72) Erfinder: Rossié, Sven, D-8070 Ingolstadt (DE); Braun, Robert, D-8071 Pförring (DE); Seitz, Franz, D-8070 Ingolstadt (DE); Strobel, Michael, D-8078 Eichstätt (DE)

(56) Entgegenhaltungen:
- EP-A- 0 152 356
- CH-A- 360 020
- DE-A- 1 917 329
- FR-A- 1 551 679
- FR-A- 2 564 064

## Beschreibung

Die Erfindung betrifft ein Verfahren und eine Vorrichtung nach den Oberbegriffen der Ansprüche 1 und 8.

Bekannt sind aus der DE-OS 2.037.826 Vorrichtungen, in denen ein Hülsenmagazin als ein schmaler quaderförmiger Kasten ausgebildet ist. Der Abstand zwischen zwei Seitenwänden des Kastens ist derart, daß die Hülsen bei nur geringem Spiel nach unten herunterrutschen können. Dabei können sie nicht kanten. In einem nicht näher dargestellten Längsschlitz des Bodens ist das Obertrum eines endlosen Förderers angeordnet, der in Abständen mit Mitnehmern versehen ist. Die abfördernde Stirnseite des Kastens ist am unteren Ende im Bereich des Obertrums des Förderers mit einer Auslauföffnung versehen, die etwas höher ist als der größte Durchmesser der Leerhülse im Falle einer konischen Hülse. Der Auslauföffnung ist ein Auslaufkasten vorgeschaltet. Über ein schräges Ablaufblech gelangen die von den Mitnehmern des Förderers herausgeschobenen Hülsen in den Auslaufkasten, in dem sie vereinzelt werden. Die Vereinzelung erfordert einen aufwendigen Regelvorgang, da sichergestellt sein muß, daß der Auslaufkasten nicht bereits mit Hülsen gefüllt ist, wenn der Förderer weitere Hülsen in den Auslaufkasten befördert. Ist der Auslaufkasten vollständig mit Hülsen gefüllt, so besteht die Gefahr einer Zerstörung der gestauten Hülsen durch den nachrückenden Förderer.

Weiterhin bekannt ist durch die DE-OS 2.506.362, daß die Hülsen in einem Magazin so untergebracht werden, daß sie schon achsrichtig liegen. Im Bodenbereich des Magazins sind Förderketten vorgesehen, die die Spulenhülsen an einen Greifer abgeben. An den Förderketten sind Mitnehmer angeordnet, welche die vorsortierten Hülsen aus dem Magazin abgreifen. Die Mitnehmer unterteilen die Förderkette in einzelne Fächer. Ebenso ist das Magazin in mehrere nebeneinander liegende Schächte unterteilt, in welchen die Hülsen mit quer zur Fahrtrichtung der Förderkette verlaufenden Achsen untergebracht sind.

Durch die vorsortierten und übereinander gestapelten Hülsen wird zur Lagerung der gleichen Anzahl von Hülsen weitaus mehr Volumen benötigt, als bei einer chaotischen Lagerung.

Das Förderband wird bei der DE-OS 2.506.362 getaktet angetrieben. Zur Abnahme der Spulen durch einen Greifer muß die Förderkette an einer vordefinierten Stelle anhalten, damit der Greifer die Hülsen aus der Förderkette entfernen kann.

Die DE-A-19 17 329 zeigt ein Magazin für mit Fäden bewickelte Spulen, welche einem Muldentransporter 1 zugeführt werden. Das Spulmagazin weist eine in ihrer Lage veränderliche Stirnwand 47 auf, welche mittels eines Transportbandes in Richtung des Muldentransporters bewegt wird. Die Spulen werden durch den Druck, welcher durch die Stirnwand erzeugt wird, aus dem Magazin in freie muldenartige Vertiefungen des Muldentransporters gepreßt. Eine Drehbewegung der Spulen muß vermieden werden, um ein Verbinden der sich ansonsten abwickelnden Fadenenden zu vermeiden. Bei zu großer Kraft, welche durch die Stirnwand erzeugt wird, ist eine Beschädigung der Spulen nicht ausgeschlossen.

Die CH-A-360 020 zeigt eine Fördervorrichtung für Hülsen, in welcher die Hülsen sortiert und lageorientiert in einem Muldentransporter einer weiteren Einrichtung zugeführt werden sollen. Hierzu werden die Hülsen immer wieder aus dem Muldentransporter ausgestoßen, so lange bis sie die gewünschte Orientierung aufweisen. Nach dem Ausstoßen werden sie auf ein Förderband geworfen und dem Muldentransporter erneut zugeführt. Diese Verfahrensweise erfordert einen großen Platzbedarf und robuste Hülsen, da die Gefahr einer Zerstörung der Hülsen sehr groß ist. Ein Magazin mit übereinander gestapelten Hülsen ist der CH-A-360 020 nicht zu entnehmen.

Aus der FR-A-15 51 679 ist eine Vorrichtung zum Vereinzeln von Textilspulen eines Muldentransporters gezeigt. Mit dieser Vorrichtung sollen Spulen gespeichert und gegen einen Förderer angedrückt werden. Das Transportband hat dabei eine Fördergeschwindigkeit gleich oder größer als die Spulenabnahme. Hierbei gleiten die Spulen, die auf einem glatten Transportband gestapelt sind, gegebenenfalls über das Transportband hinweg. Es wird hierbei angestrebt, ein Transportband mit möglichst großer Glätte und kleinem Reibwert zu verwenden. Die Hülsen werden durch unkontrollierten und ungleichmäßigen Abrieb geschädigt.

Aufgabe der vorliegenden Erfindung ist es, ein Verfahren zu schaffen, bei dem Spulhülsen mit möglichst geringem Platzbedarf ohne der Gefahr einer Zerstörung der Spulhülsen gelagert und einer Entnahmeöffnung einzeln zugeführt werden können. Weiterhin soll eine Vorrichtung zur Durchführung dieses Verfahrens geschaffen werden.

Die Aufgabe wird durch die Merkmale der Ansprüche 1 und 7 gelöst.

Die Aufgabe wird dadurch gelöst, daß die Spulhülsen der untersten Lage auf ihrer Unterseite an einer sich in Richtung zur Entnahmestelle bewegenden Auflage beaufschlagt werden, wodurch auf die Spulhülsen eine tangentiale Kraft einwirkt, welche die Spulhülsen zur Entnahmestelle im wesentlichen rollt. Die Spulhülsen der untersten Lage stützen sich dabei auf den Spulhülsen der oberen Lage ab und bewegen sich, angetrieben durch die Auflage, mit etwa halber Geschwindigkeit der Auflage in Richtung zur Entnahmestelle. Wird die Kraft, welche auf die Spulhülsen einwirkt, durch ein Förderband erzeugt, auf dem die Spulhülsen gelagert werden und dessen Obertrum in Richtung zur Entnahmestelle bewegt wird, so ist in vorteilhafter Weise ein kontinuierlicher Antrieb der Spulhülsen gewährleistet. Wirkt die tangentiale Kraft reibschlüssig auf die Spulhülsen, so wird ein ruhiger Lauf der Spulhülsen gewährleistet. Durch die Wahl des Reibbeiwertes der Auflage in Abhängigkeit von dem Hülsenmaterial wird in vorteilhafter Weise gewährleistet, daß eine im wesentlichen rollende Bewegung auf die Spulhülsen übertragen wird. Durch die rollende Bewegung wird verhindert, daß die Spulhülsen gegen Hindernisse gedrückt werden, ohne daß die Auflage und die Spulhülsen aneinander vorbeigleiten können, wie dies bei einem zu hohen Reibbeiwert der Fall wäre. Die tangentiale Kraft auf die Spulhülsen hängt weiterhin von einer Normal kraft ab, welche durch eine Reduzierung der übereinander gelagerten Spulhülsen begrenzt wird. Die Begrenzung der maximalen Kraft geschieht mittels Rückhaltevorrichtungen.

Wird die Auflage synchron zu einer Entnahmevorrichtung angetrieben, so wird in vorteilhafter Weise verhindert, daß die Spulhülsen gegen die Entnahmevorrichtung gefördert werden, obwohl die Entnahmevorrichtung nicht für eine Entnahme bereit ist. Zur Verhinderung von Beschädigungen von Spulhülsen bei der Entnahme der Spulhülsen aus dem Hülsenmagazin werden die Spulhülsen durch einen Abweiser von Gehäusekanten, an welchen mit einer Beschädigung zu rechnen wäre, entfernt gehalten.

Die Vorrichtung zur Durchführung des Verfahrens ist dadurch gekennzeichnet, daß die unterste Lage der Spulhülsen auf einer Auflage angeordnet ist, die in Richtung zur Entnahmestelle bewegbar ist und die eine tangentiale Kraft auf die Oberflächen der Spulhülsen ausübt, so daß die Spulhülsen in Richtung zur Entnahmestelle im wesentlichen rollen. Die Normalkraft auf die Auflage, welche für eine tangentiale Kraft zwischen der Auflage und den Spulhülsen nötig ist, wird einerseits durch das Gewicht der Spulhülsen selbst und andererseits durch das Gewicht der über den Spulhülsen der untersten Lage angeordneten Spulhülsen der oberen Lagen bewirkt. Durch die Bewegung der Auflage wird eine im wesentlichen rollende Bewegung auf die Spulhülsen aufgebracht. Die über diesen Spulhülsen der untersten Lage angeordneten Spulhülsen der oberen Lagen werden hierdurch ebenfalls durch die Reibung mit den Spulhülsen der untersten Lage in eine Bewegung versetzt. Diese Bewegung ist ebenfalls im wesentlichen rollend.

Ist die Auflage ein Förderband, so ist in vorteilhafter Weise neben der kontinuierlichen Bewegung ein Bauteil mit besonders geringem Platzbedarf eingesetzt. Ist das Obertrum des Förderers in Richtung zur Entnahmestelle geneigt angeordnet, so wird in vorteilhafter Weise die Bewegung der Spulhülsen in Richtung zur Entnahmestelle unterstützt. Eine Neigung von weniger als 10° hat sich als vorteilhaft erwiesen.

Eine zwischen der Auflage und den Spulhülsen auftretende Reibkraft wird vorteilhafterweise derart gewählt, daß sie geringer ist als die Kraft zur Zerstörung der Spulhülsen und höher als eine maximale Rückhaltekraft, welche durch das Gewicht der gespeicherten Spulhülsen auf die Spulhülsen der untersten Lage einwirkt. Als vorteilhaft hat sich ein Reibbeiwert zwischen Auflage und Spulhülsen in einem Bereich von » = 0,5 - 0,8 erwiesen.

Werden in dem Hülsenmagazin Rückhaltevorrichtungen zur Begrenzung des auf die Auflage einwirkenden Gewichtes der Spulhülsen angeordnet, so wird die maximale Rückhaltekraft in vorteilhafter Weise auf einen maximalen Wert begrenzt, auch wenn eine größere Anzahl von Spulhülsen in dem Hülsenmagazin gespeichert wird, als zur Erzeugung der maximalen Rückhaltekraft nötig ist.

Durch die Zuordnung einer drehbar angetriebenen Welle als Abweisvorrichtung für Spulhülsen von einer Gehäusekante des Hülsenmagazins wird in vorteilhafter Weise eine Beschädigung von Spulhülsen verhindert. Die angetriebene Welle wirkt auf die sich anlegenden Spulhülsen derart ein, daß diese Spulhülsen von der kritischen Gehäusekante weggedreht werden. Sind auf der Welle ein oder mehrere Exzenter angeordnet, so werden die in dem Hülsenmagazin angeordneten Spulhülsen aufgelockert und eine Brückenbildung und somit Verstopfung des Hülsenmagazins wird vermieden.

Eine zerstörungsfreie Vereinzelung der Spulhülsen wird in vorteilhafter Weise durch die Synchronisierung von der Auflage und/oder der Abweisvorrichtung bezüglich der Bewegungen der Entnahmevorrichtung gewährleistet. Die Entnahmevorrichtung ist in vorteilhafter Weise ein Vertikalförderer mit Fächern für einzelne Spulhülsen. Stehen die Fördergeschwindigkeiten von Auflage und Vertikalförderer in einem festen Übersetzungsverhältnis, so wird eine äußerst schonende Handhabung der Spulhülsen gewährleistet, da die Druckkräfte auf die Spulhülsen minimiert werden.

Ist dem Förderer, dem Vertikalförderer und/oder der Abweisvorrichtung ein gemeinsamer Antrieb zugeordnet, so wird einerseits eine kostengünstige Vorrichtung ermöglicht und andererseits auf einfache Weise eine Synchronisation der einzelnen Vorrichtungen ermöglicht. Erfolgt der Antrieb der einzelnen Vorrichtungen durch Pneumatikzylinder, so wird bei Auftreten eines Fehlers, z. B. durch Klemmen von Spulhülsen bei den Förderern, in vorteilhafter Weise vermieden, daß der Antrieb überlastet wird.

Zur lagesortierten Ablage asymmetrischer Spulhülsen sowie zur Entnahme der Spulhülsen aus dem Vertikalförderer ist dem Vertikalförderer eine Handhabungseinrichtung zugeordnet. Die Handhabungseinrichtung ist pneumatisch betrieben, wodurch wiederum die schonende Behandlung der Spulhülsen gewährleistet ist. Zur Erkennung der Lage asymmetrischer Spulhülsen sind der Handhabungseinrichtung Einrichtungen zugeordnet. Diese Einrichtungen sind in vorteilhafter Weise Sensoren wie z. B. Lichtschranken, welche die Lage der Spulhülsen mechanisch, optisch oder elektrisch ertasten.

Ausführungsbeispiele sind in den nachfolgenden Zeichnungen näher beschrieben. Es zeigen
- Figur 1: ein Hülsenmagazin mit einem Vertikalförderer als Abnahmevorrichtung;
- Figur 2: ein Hülsenmagazin mit Vorrichtungen zur Reduzierung der maximalen Rückhaltekraft;
- Figur 3: eine Hülsenhandhabungsvorrichtung;
- Figur 4: eine Handhabungseinrichtung; und
- Figur 5: einen Hülsenabweiser.

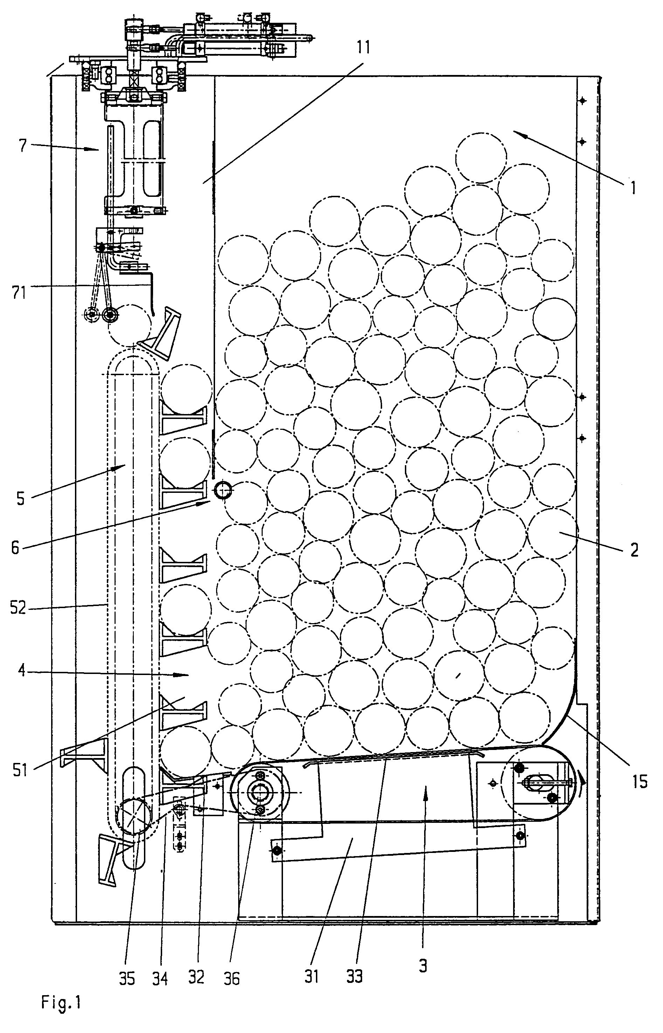

In Figur 1 ist ein Hülsenmagazin 1 dargestellt, in dem Spulhülsen 2 in Lagen übereinander gespeichert sind. Die Spulhülsen 2 sind in diesem Fall von konischer Form. Es ist aber ebenso möglich, zylindrische Soulhülsen oder Spulhülsen anderer handelsüblicher Formen zu speichern. Die unterste Lage der Spulhülsen 2 liegt auf einem Bandförderer 3 auf, dessen Förderrichtung im wesentlichen quer zur Achse der Spulhülsen 2 gerichtet ist. Die Förderrichtung erzeugt auf die Spulhülsen 2 eine Kraft in Richtung zur Entnahmestelle 4. Die Hülsen der oberen Lagen stehen entweder an der Wandung 11 des Hülsenmagazins 1 oder an dem Vertikalförderer 5 an. Spulhülsen 2, die sich vor einem freien Fach 51 des Vertikalförderers 5 befinden, bewegen sich in Richtung zum Förderband 52 des Vertikalförderers 5. Da der Vertikalförderer 5 von unten nach oben fördert, wird im wesentlichen zuerst die unterste Lage der Spulhülsen 2 von dem Vertikalförderer 5 übernommen. Die Spulhülsen 2 bewegen sich dabei einerseits auf dem Förderband 31 und andererseits auf den über den Spulhülsen 2 der untersten Lage angeordneten Spulhülsen 2 der oberen Lagen. Der Antrieb der Spulhülsen 2 erfolgt somit über das Förderband 31 während sich die Spulhülsen 2 an den über ihnen gestapelten Spulhülsen 2 abstützen. Sind Fächer 51 noch nicht mit Spulhülsen 2 belegt, während sie an den oberen Lagen entlangbefördert werden, so drücken die Spulhülsen 2 der oberen Lagen im Bereich der Entnahmestelle 4 in die leeren Fächer 51. Dadurch wird eine vollständige Füllung des Vertikalförderers 5 erzielt.

Die Reibung des Förderbandes 31 auf die Spulhülsen 2 ist derart ausgelegt, daß bei einer Klemmung der Hülsen die Kraft, die durch das Förderband 31 auf die Spulhülsen 2 aufbringbar ist, geringer ist, als die Kraft zur Zerstörung der Spulhülsen. Dies bedeutet, daß je nachdem, ob Papierhülsen oder Kunststoffhülsen gespeichert werden, unterschiedliche Reibbeiwerte bei den Förderbändern 31 eingesetzt werden. Die Reibbeiwerte bewegen sich in einem Bereich zwischen 0,5 und 0,8. Eine zu geringe Reibung würde bewirken, daß die Spulhülsen 21 nicht zuverlässig gefördert werden können. Das Förderband 31 würde unter den Spulhülsen 21 durchrutschen.

Bei einer richtigen Wahl des Reibbeiwertes entsteht im wesentlichen ein Abrollen der Spulhülsen 2 der untersten Lage zwischen Förderband 31 und den Spulhülsen 2 der oberen Lagen.

Die Entnahmeöffnung 4 ist im Ausführungsbeispiel der Figur 1 derart groß gewählt, daß, falls ein Fach 51 des Vertikalförderers 5 durch die Spulhülsen 2 der untersten Lage nicht gefüllt werden kann, Spulhülsen 2 der oberen Lagen aufgenommen werden. Die Spulhülsen 2 der oberen Lagen werden dabei durch die Reibung und Drehbewegung der unteren Lagen der Spulhülsen 2 ebenfalls in Richtung zum Vertikalförderer 5 bewegt.

Ein Abweiser 6, der an der unteren Kante der Wandung 11 des Hülsenmagazins 1 angeordnet ist, verhindert ein Einklemmen von Spulhülsen 2 zwischen Vertikalförderer 5 und der Wandung 11. Der Abweiser 6 führt eine Drehbewegung in Pfeilrichtung aus, wodurch er Spulhülsen 2, die in den Bereich der Kante gelangen, dreht und somit von dem kritischen Bereich fernhält.

Der Bandförderer 3 ist in dieser vorteilhaften Ausgestaltung in Richtung zur Entnahmeöffnung 4 geneigt angeordnet. Hierdurch wird gewährleistet, daß bei einem nahezu entleerten Hülsenmagazin 1 die letzten Spulhülsen 2 in Richtung zur Entnahmeöffnung rollen. Es wird damit trotz der reduzierten Andrückkraft der fehlenden Spulhülsen 2 der oberen Lagen eine ausreichende Förderwirkung des Bandförderers 3 auf die Spulhülsen 2 sichergestellt.

Die Übergabe der Spulhülsen 2 von dem Bandförderer 3 an den Vertikalförderer 5 erfolgt mit einer Übergaberampe 32. Diese Übergaberampe 32 ist derart angeordnet, daß die Spulhülsen 2 von dem Bandförderer 3 in ein leeres Fach 51 des Vertikalförderers 5 rollen können. Die Übergaberampe 32 stützt dabei die zu übergebende Spulhülse 2 an ihren beiden Enden derart ab, daß der Boden des Faches 51 des Vertikalförderers 5 zwischen den Abstützungen der Übergaberampe 32 hindurch die Spulhülse 2 in ihrem Mittel bereich erfaßt.

Unterhalb des Obertrums des Bandförderers 3 ist eine Unterstützung 33 des Förderbandes 31 angeordnet. Hierdurch wird in vorteilhafter Weise gewährleistet, daß unabhängig von der Spannung des Förderbandes 31 eine ebene Fläche entsteht, auf der die Spulhülsen 2 abrollen.

Oberhalb einer nahe am Gehäuse des Hülsenmagazins 1 angeordneten Umlenkwalze des Förderbandes 31 ist ein Leitblech 15 angeordnet. Dieses Leitblech gewährleistet in vorteilhafter Weise, daß die Spulhülsen 2 auf die ebene Fläche des Förderbandes geleitet werden.

Der Antrieb des Bandförderers 3 ist in dem in Figur 1 dargestellten Ausführungsbeispiel über eine Antriebskette 34 verbunden. Hierdurch wird eine Synchronisation der Fördergeschwindigkeit des Vertikalförderers 5 mit der Fördergeschwindigkeit des Bandförderers 3 erreicht. Durch eine entsprechende Wahl der Größe der Zahnräder 35 und 36 ist das Verhältnis der Geschwindigkeiten von Vertikalförderer zu Bandförderer 3 einstellbar. Als vorteilhaft hat sich ein Geschwindigkeitsverhältnis von Vertikalförderer 5 zu Bandförderer 3 in einem Bereich von 1 : 1 bis 1 : 0,75 erwiesen.

Nachdem die Spulhülsen 2 aus dem Hülsenmagazin 1 an den Vertikalförderer 5 übergeben worden sind, werden sie in dem jeweiligen Fach 51 zum oberen Wendepunkt des Vertikalförderers 5 befördert. Befindet sich eine Spulhülse 2 an dem oberen Wendepunkt des Vertikalförderers 5, so stoppt der Antrieb des Vertikalförderers 5. Eine Handhabungseinrichtung 7 bewegt sodann einen Greifer 71 nach unten, und ergreift die in dem Vertikalförderer 5 liegende Spulhülse 2. Der Greifer 71 wird daraufhin wieder eingezogen, die Hülse wird für eine lagerichtige Ablage 90° nach links oder nach rechts gedreht und an eine weitere Vorrichtung abgegeben. Nachdem diese Spulhülse 2 aus dem Vertikalförderer 5 entfernt worden ist, bewegt sich der Vertikalförderer solange weiter, bis das nächste gefüllte Fach 51 in Reichweite des Greifers 71 angelangt ist.

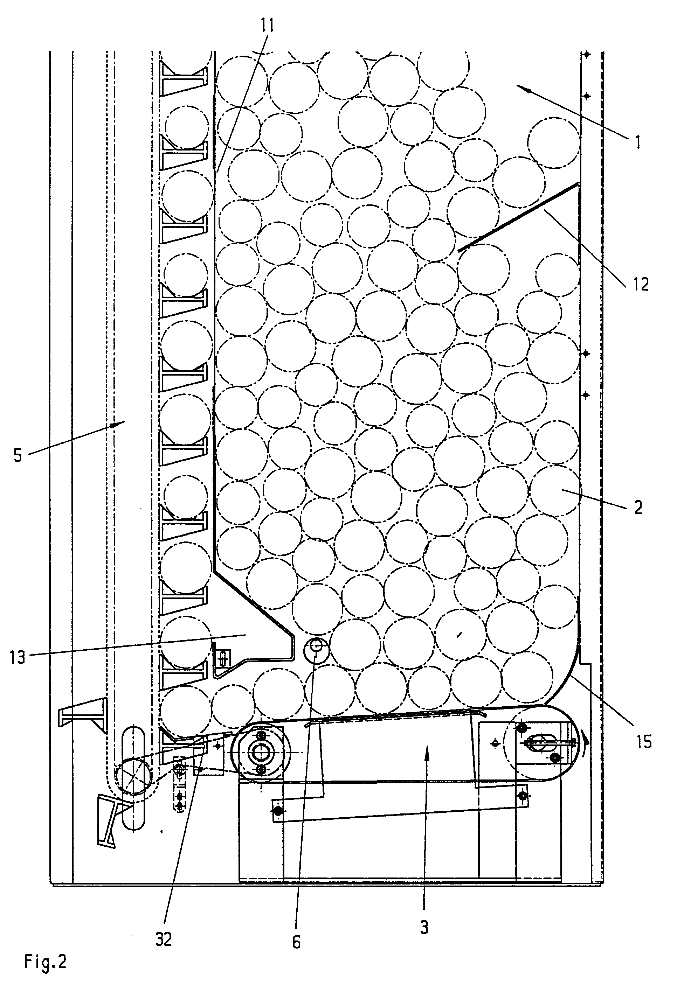

In Fig. 2 ist ein Hülsenmagazin 1 dargestellt, das mit Rückhaltevorrichtungen 12 und 13 ausgestattet ist. Die Rückhaltevorrichtungen 12 und 13 bestehen aus keilförmig geformten Blechen, die durch ihre schräg zum Inneren des Hülsenmagazins 1 hin abfallenden oberen Flächen bewirken, daß die auf diesen Flächen aufliegenden Spulhülsen 2 gut abrollen können. Zur Vermeidung einer Klemmung der unterhalb der Rückhaltevorrichtung 12 gespeicherten Spulhülsen 2, ist die untere Fläche der Rückhaltevorrichtung 12 in ähnlicher Weise wie deren obere Fläche schräg nach unten zum Inneren des Hülsenmagazins 1 hin gerichtet. Hierdurch entsteht zur Wandung des Hülsenmagazins 1 hin ein Freiraum, in den die Spulhülsen 2 bei einer Anhebung eintauchen können. Eine leichte Anhebung der Spulhülsen der oberen Lagen entsteht, wenn die Spulhülsen 2 der unteren Lage in Richtung zur Entnahmeöffnung 4 bewegt werden. Die Rückhaltevorrichtung 12 bewirkt im wesentlichen, daß das Gewicht der gesamten Spulhülsen 2 auf den Bandförderer 3 einen maximalen Wert nicht überschreitet. Durch eine Reduzierung der Anzahl der Spulhülsen 2, die direkt über dem Bandförderer 3 angeordnet sind, reduziert sich auch die Reibkraft auf die unterste Lage der Spulhülsen 2. Bei zu hohem Gewicht der Spulhülsen 2 auf dem Bandförderer 3 erhöht sich die Kraft auf einen unzulässig hohen Wert, welche die Spulhülsen 2 in Richtung zum Vertikalförderer 3 bewegt. Dies führt zu einer Beschädigung der Spulhülsen 2. Die Spulhülsen 2, die oberhalb der untersten Lage der Spulhülsen 2 angeordnet sind, bewirken durch ihr Eigengewicht eine Rückhaltekraft, die durch die Rückhaltevorrichtung 12 reduziert wird.

Eine ähnliche Funktion wie die Rückhaltevorrichtung 12 hat die Rückhaltevorrichtung 13. Sie bewirkt, daß die Spulhülsen 2, die sich kurz vor der Übergaberampe 32 befinden, ungehindert in Richtung zum Vertikalförderer 5 bewegen können. Durch diese Art der Vorvereinzelung ist es den Spulhülsen 2 möglich, auf die Übergaberampe 32 und in den Vertikalförderer 5 zu rollen.

Der Abweiser 6 bewirkt durch seine Drehung entgegen der Förderrichtung der Spulhülsen 2, daß die in den Bereich unterhalb der Rückhaltevorrichtung 13 nachdrängenden Spulhülsen 2 leicht zurückgehalten werden. Hierdurch wird verhindert, daß ein zu großer Druck der Spulhülsen auf den Vertikalförderer 5 entsteht, der zu einem Stau oder zu einer Zerstörung der Spulhülsen 2 führen kann. Außerdem werden durch die Drehbewegung des Abweisers 6 die in dem Hülsenmagazin 1 befindlichen Spulhülsen 2 aufgelockert, wodurch ein Verstopfen des Hülsenmagazins 1 vermieden wird.

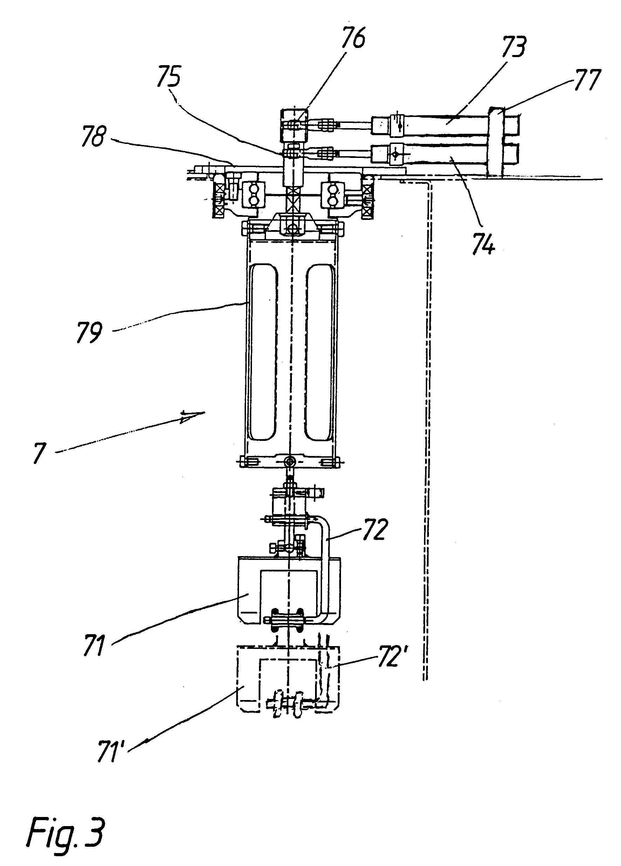

Fig. 3 zeigt die Handhabungseinrichtung 7, die mit ihrem Greifer 71 Spulhülsen 2 von dem Vertikalförderer 5 aufnimmt und an eine weitere, hier nicht näher dargestellte Vorrichtung, insbesondere einen Bandförderer, abgibt. Die Handhabungseinrichtung 7 ist in diesem Ausführungsbeispiel pneumatisch betrieben. Der Greifer 71 wird zur Aufnahme der Spulhülse 2 in die Position 71' ausgefahren. Der bereits geöffnete Klemmbügel 72' wird geschlossen und klemmt dabei eine Spulhülse 2 zwischen Greifer 71' und Klemmbügel 72' ein. Nach dem Ergreifen der Spulhülse 2 wird durch eine nicht näher dargestellte Einrichtung bei konischen Spulhülsen die Lage der Konizität festgestellt. Zur lagerichtigen Ablage der konischen Spulhülsen findet nun eine Drehung der konischen Spulhülse um 90° nach links oder rechts statt. Diese Drehung geschieht durch die Pneumatikzylinder 73 und 74. Der Pneumatikzylinder 74 ist mit seiner Gabel 75 ortsfest auf der Montageplattform 78 befestigt. Bei einer Betätigung des Pneumatikzylinders 74 bewegt dieser den Schlitten 74, der bezügl. der Handhabungseinrichtung 7 verschiebbar gelagert ist. Durch diese Verschiebung wird der Pneumatikzylinder 73, der ebenfalls auf dem Schlitten 77 befestigt ist, verschoben und bewirkt durch die Befestigung seiner Gabel 76 an der Handhabungseinrichtung 7 ein Verdrehen des Käfigs 79 um 90°. Durch eine Betätigung des Pneumatikzylinders 73 bewegt sich der Käfig 79 um 90° in die entgegengesetzte Richtung. Durch die Kombination der beiden Bewegungsmöglichkeiten der Pneumatikzylinder 73 und 74 ist es somit möglich, den Käfig 79 ausgehend von der Grundstellung um 90° nach links oder nach rechts zu drehen, und somit konische Spulhülsen unabhängig von der angelieferten Lage ihrer Konizität in eine gleichgerichtete Lage zu drehen.

Anstelle der beiden Pneumatikzylinder 73 und 74 ist auch ein Doppelhubzylinder oder ein elektrischer Antrieb möglich.

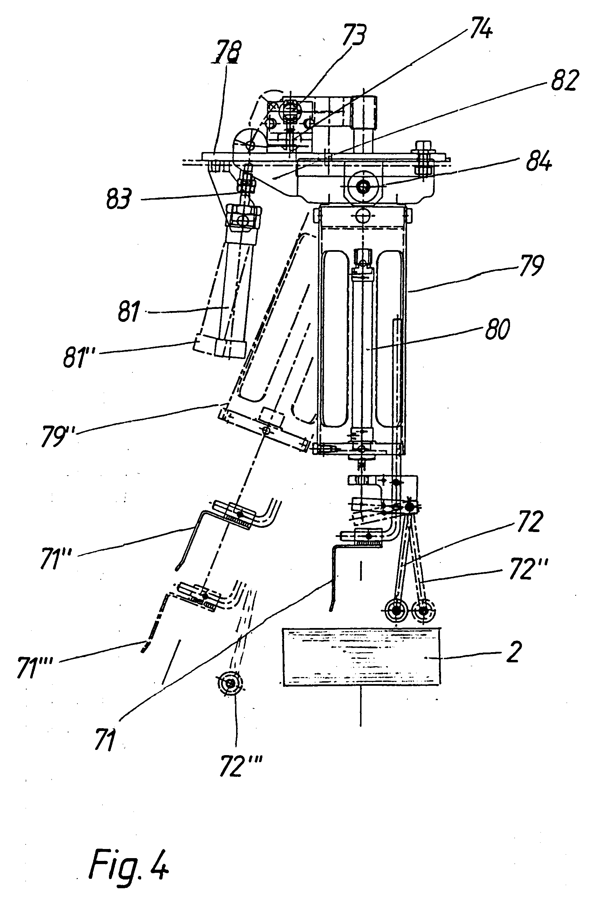

Fig. 4 zeigt die Handhabungseinrichtung 7 in einer Seitenansicht. Die Spulhülse 2 befindet sich in dieser Lage am oberen Wendepunkt des Vertikalförderers 5. Der Greifer 71 befindet sich in seiner oberen Position. Der Klemmbügel 72 befindet sich in Klemmposition. Durch Betätigen eines nicht dargestellten Pneumatikzylinders öffnet sich zuerst der Klemmbügel 72 bis in die Position 72''. Durch Betätigen der Zylinder 73 und/oder 74 wird der Käfig 79 um 90° gedreht, so daß der Greifer 71 und der Klemmbügel 72'' in Aufnahmeposition über der Spulhülse 2 stehen. Sodann wird durch die Betätigung des Zylinders 80 der Greifer 71 und der Klemmbügel 72'' abgesenkt bis sich die Spulhülse 2 zwischen Greifer 71 und Klemmbügel 72'' befindet. Anschließend wird durch Einfahren des nicht dargestellten Pneumatikzylinders der Klemmbügel 72'' in die Position 72 zurückbewegt und klemmt somit die Spulhülse 2. Durch Einfahren des Pneumatikzylinders 80 wird die Spulhülse 2 angehoben. Daraufhin wird der Pneumatikzylinder 81 betätigt, der über den Hebelarm 82 den Käfig 79 in die Lage 79'' bewegt. Durch erneutes Ausfahren des Pneumatikzylinders 80 wird der Greifer 71'' in die Position 71''' bewegt. In der Endstellung wird der Klemmbügel 72''' geöffnet und die Hülse 2 freigegeben. Nach der Freigabe der Hülse 2 werden Greifer 71''' und Klemmbügel 72''' in die Position 71'' zurückbewegt und anschließend wird der Käfig 79'' durch Einziehen des Pneumatikzylinders 81'' in die vertikale Lage zurückbewegt.

Bei der Montage der Handhabungseinrichtung 7 erfolgt die Ausrichtung des Käfigs 79 in eine vertikale Position durch eine Stellschraube 83, welche auf den Hebelarm 82 einwirkt. Die Stellschraube 83 stellt dabei einen festen Anschlag auf der Montageplattform 78 dar, wodurch die Endstellung des Pneumatikzylinders 81 die Endstellung des Käfigs 79'' vorgegeben wird.

Die in den Fig. 3 und 4 dargestellte Ausführungsform der Handhabungseinrichtung 7 zeichnet sich durch die Vorteile aus, daß die gesamte Einrichtung auf der Montageplattform 78 vormontierbar ist und somit sehr leicht austauschbar ist. Außerdem ist durch die vorteilhafte Anordnung der Lagerstellen eine wirkungsvolle Reduzierung der Toleranzen erzielbar, so daß der Greif- und Abgabevorgang sehr exakt ausführbar ist. Die Justierung der Greif- und Abgabeposition erfolgt ausschließlich durch die Stellschraube 83. Durch Verstellen der Stellschraube 83 ist eine Veränderung des Anschlages des Hebelarms 82 dahingehend durchführbar, daß der Anschlag für eine vertikale Ausrichtung des Käfigs 79 bei einer Drehung um eine Achse 84 möglich ist.

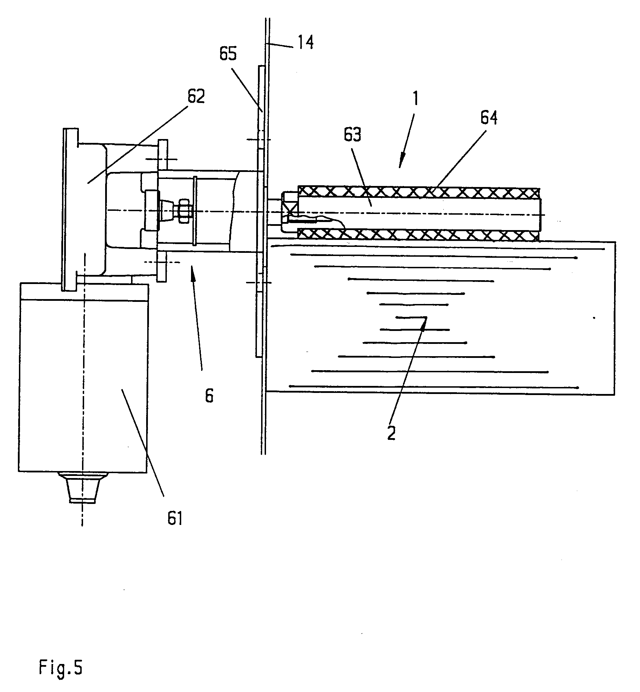

Fig. 5 stellt eine Ausführungsform des Abweisers 6 mitsamt einer Antriebseinrichtung dar. Die Antriebseinrichtung besteht aus dem Motor 61 sowie aus einem Getriebe 62. Das Getriebe 62 ist winkelig angeordnet, so daß die Bautiefe des Hülsenmagazins 1 reduziert ist. Die aus dem Getriebe 62 ragende Welle 63 reicht entsprechend den Fig. 1 und 2 in das Hülsenmagazin 1 hinein. Motor 61 und Getriebe 62 sind auf einer Montageplattform 65 angeordnet und an der Rückwand 14 des Hülsenmagazins 1 befestigt.

Die Welle 63 ist von einem Bezug 64 ummantelt. Dieser Bezug 64 gewährleistet eine gute Reibung zwischen dem Abweiser 6 und der Spulhülse 2. Durch die Reibung zwischen dem Belag 64 und der Hülse 2 wird gewährleistet, daß die Hülse 2 in eine Drehbewegung versetzt wird, die dazu führt, daß sie aus einem möglichen Gefahrenbereich bewegt wird. Die in Fig. 5 dargestellte Ausführungsform ist besonders geeignet für ein Hülsenmagazin wie es in Fig. 1 dargestellt ist. Für eine Hülsenmagazin gemäß Fig. 2 ist es vorteilhafter, wenn anstelle des Bezugs 64 ein exzentrischer Aufsatz auf der Welle 63 angeordnet ist. Durch den exzentrischen Aufsatz werden auf die vereinzelten Spulhülsen 2 nachdrückende Spulhülsen 2 zeitweise zurückgehalten und können in einer entsprechenden Stellung, des Exzenters wieder nachrollen. Außerdem werden hierdurch die Spulhülsen 2 in dem Hülsenmagazin aufgelockert.

Insbesondere bei einem Hülsenmagazin gemäß Ausführungsform der Fig. 2 ist es vorteilhaft, anstelle des Antriebs 61 und des Getriebes 62 eine Zahnriemen- oder Zahnkettenverbindung zu dem Zahnrad 36 zu schaffen. Hierdurch ergibt sich eine kostengünstigere Ausführungsform.

Die Erfindung ist nicht auf die in dieser Beschreibung behandelten Ausführungsbeispiele beschränkt. Sie soll vielmehr für die verschiedensten Spulhülsen vorteilhaft einsetzbar sein. Insbesondere Kunststoff- und Papphülsen in zylindrischer und konischer Ausführung, aber auch andere Formen von Spulhülsen sind in dem erfindungsgemäßen Verfahren und der Vorrichtung magazinier- und vereinzelbar.

## Patentansprüche

1. Verfahren zum Speichern und Handhaben von Spulhülsen in einem Hülsenmagazin, wobei die Spulhülsen in Lagen übereinander gestapelt werden und die Spulhülsen wenigstens der untersten Lage vereinzelt und von dem Hülsenmagazin entfernt werden, dadurch gekennzeichnet, daß die Spulhülsen der untersten Lage auf ihrer Unterseite von einem sich in Richtung zur Entnahmestelle bewegenden rauhen Förderband mit hohem Reibwert beaufschlagt werden, während sie sich an den über ihnen gestapelten Spulhülsen abstützen, wodurch auf die Spulhülsen eine Reibkraft tangential einwirkt, so daß eine Rollbewegung der Spulhülsen erzeugt wird.

2. Verfahren nach Anspruch 1, dadurch gekennzeichnet, daß die tangentiale Kraft durch das Förderband erzeugt wird, auf dem die Spulhülsen gelagert werden und dessen Obertrum in Richtung zur Entnahmestelle bewegt wird.

3. Verfahren nach einem der Ansprüche 1 oder 2, dadurch gekennzeichnet, daß der Reibbeiwert der Auflage in Abhängigkeit von dem Hülsenmaterial gewählt wird.

4. Verfahren nach einem der Ansprüche 1 bis 3, dadurch gekennzeichnet, daß die maximale Kraft, die auf die Spulhülsen einwirkt, durch eine teilweise Abstützung der übereinander gelagerten Spulhülsen an Rückhaltevorrichtungen begrenzt wird.

5. Verfahren nach einem der Ansprüche 1 bis 4, dadurch gekennzeichnet, daß die Auflage synchron zu einer Entnahmevorrichtung betrieben wird.

6. Verfahren nach einem der Ansprüche 1 bis 5, dadurch gekennzeichnet, daß die Spulhülsen durch einen Abweiser von Gehäusekanten entfernt gehalten werden.

7. Vorrichtung zum Speichern von Spulhülsen (2) in einem Hülsenmagazin in dem sich die Spulhülsen (2) der untersten Lage an den über ihnen gestapelten Spulhülsen (2) abstützen, und zum Vereinzeln der Spulhülsen mit einem Förderband, das unterhalb der gespeicherten Spulhülsen angeordnet ist, und dessen Laufrichtung im wesentlichen tangential zur Oberfläche der gespeicherten Spulhülsen gerichtet ist und mit einer Vorrichtung zum Entfernen der vereinzelten Spulhülsen aus dem Hülsenmagazin an einer Entnahmestelle, insbesondere zur Durchführung des Verfahrens nach einem der Ansprüche 1 bis 6, dadurch gekennzeichnet, daß das Förderband (31) eine rauhe, die untereste Lage der Spulhülsen (2) kontaktierende, in Richtung zur Entnahmestelle bewegbare und mit einem hohem Reibbeiwert ausgestattete Oberfläche aufweist, die eine Reibkraft tangential auf die Oberflächen der Spulhülsen (2) der untersten Lage ausübt, so daß die Spulhülsen (2) im wesentlichen rollen.

8. Vorrichtung nach Anspruch 6 oder 7, dadurch gekennzeichnet, daß das Obertrum des Förderbandes (31) in Richtung zur Entnahmestelle geneigt angeordnet ist.

9. Vorrichtung nach Anspruch 8, dadurch gekennzeichnet, daß die Neigung des Förderbandes (31) weniger als 10° beträgt.

10. Vorrichtung nach einem der Ansprüche 7 bis 9, dadurch gekennzeichnet, daß eine Reibkraft zwischen Förderband (31) und Spulhülsen (2) geringer ist als die Kraft zur Zerstörung der Spulhülsen (2) und höher als eine maximale Rückhaltekraft, welche durch das Gewicht der gespeicherten Spulhülsen (2) auf die Spulhülsen (2) der untersten Lage erzeugbar ist.

11. Vorrichtung nach einem der Ansprüche 7 bis 10, dadurch gekennzeichnet, daß der Reibbeiwert der Oberfläche des Förderbandes (31) zwischen 0,5 und 0,8 beträgt.

12. Vorrichtung nach einem der Ansprüche 7 bis 11, dadurch gekennzeichnet, daß im Hülsenmagazin (1) eine Rückhaltevorrichtung (12, 13) zur Begrenzung des auf das Förderband (31) einwirkenden Gewichtes der Spulhülsen (2) angeordnet ist.

13. Vorrichtung nach einem der Ansprüche 7 bis 12, dadurch gekennzeichnet, daß der Entnahmestelle eine drehbar angetriebene Welle (63) als Abweisvorrichtung (6) für Spulhülsen (2) von einer Gehäusekante des Hülsenmagazins (1) zugeordnet ist.

14. Vorrichtung nach Anspruch 13, dadurch gekennzeichnet, daß auf der Welle (63) wenigstens ein Exzenter zur Lockerung der zu vereinzelnden Spulhülsen (2) angeordnet ist.

15. Vorrichtung nach einem der Ansprüche 7 bis 14, dadurch gekennzeichnet, daß die Bewegungen des Förderbandes (31) und/oder der Abweisvorrichtung (6) bezüglich der Bewegungen der Entnahmevorrichtung syrichronisiert sind.

16. Vorrichtung nach einem der Ansprüche 7 bis 15, dadurch gekennzeichnet, daß dem Förderband (31) als Entnahmevorrichtung ein Vertikalförderer (5) mit Fächern (51) für einzelne Spulhülsen (2) zugeordnet ist.

17. Vorrichtung nach Anspruch 16, dadurch gekennzeichnet, daß die Fördergeschwindigkeiten von Förderband (31) und Vertikalförderer (5) in einem festen Übersetzungsverhältnis zueinander stehen.

18. Vorrichtung nach Anspruch 16 oder 17, dadurch gekennzeichnet, daß dem Förderer (3), dem Vertikalförderer (5) und/oder der Abweisvorrichtung (6) ein gemeinsamer Antrieb zugeordnet sind.

19. Vorrichtung nach Anspruch 18, dadurch gekennzeichnet, daß der Antrieb pneumatisch erfolgt.

## Claims

1. Method of storing and handling bobbin tubes in a tube magazine, the bobbin tubes being stacked in layers one above the other and the bobbin tubes of at least the lowermost layer being singled out and removed from the tube magazine, characterized in that the bobbin tubes of the lowermost layer are acted upon on their underside by a rough conveyor belt with a high coefficient of friction moving in the direction of the removal point, while they are supported on the bobbin tubes stacked above them, as a result of which a friction force acts tangentially on the bobbin tubes so that a rolling movement of the bobbin tubes is produced.

2. Method according to Claim 1, characterized in that the tangential force is produced by the conveyor belt on which the bobbin tubes are mounted and whereof the upper run is moved in the direction of the removal point.

3. Method according to one of Claims 1 or 2, characterized in that the coefficient of friction of the support is selected as a function of the tube material.

4. Method according to one of Claims 1 to 3, characterized in that the maximum force acting on the bobbin tubes is limited by a partial support of the bobbin tubes, mounted one above the other, on retaining apparatus.

5. Method according to one of Claims 1 to 4, characterized in that the support is operated in synchronism with a removal apparatus.

6. Method according to one of Claims 1 to 5, characterized in that the bobbin tubes are kept away from housing edges by means of a deflector.

7. Apparatus for storing bobbin tubes (2) in a tube magazine in which the bobbin tubes (2) of the lowermost layer are supported against the bobbin tubes (2) stacked above them, and for singling out the bobbin tubes, having a conveyor belt which is arranged below the stored bobbin tubes and whereof the running direction is directed substantially tangentially with respect to the surface of the stored bobbin tubes, and having an apparatus for removing the singled-out bobbin tubes from the tube magazine at a removal point, in particular for carrying out the method according to one of Claims 1 to 6, characterized in that the conveyor belt (31) has a rough surface which contacts the lowermost layer of the bobbin tubes (2), can be moved in the direction of the removal point and is equipped with a high coefficient of friction and which exerts a friction force tangentially on the surfaces of the bobbin tubes (2) of the lowermost layer, so that the bobbin tubes (2) substantially roll.

8. Apparatus according to Claim 6 or 7, characterized in that the upper run of the conveyor belt (31) is arranged inclined in the direction of the removal point.

9. Apparatus according to Claim 8, characterized in that the inclination of the conveyor belt (31) is less than 10°.

10. Apparatus according to one of Claims 7 to 9, characterized in that a friction force between conveyor belt (31) and bobbin tubes (2) is smaller than the force for destroying the bobbin tubes (2) and is larger than a maximum retaining force which can be produced by the weight of the stored bobbin tubes (2) on the bobbin tubes (2) of the lowermost layer.

11. Apparatus according to one of Claims 7 to 10, characterized in that the coefficient of friction of the surface of the conveyor belt (31) is between 0.5 and 0.8.

12. Apparatus according to one of Claims 7 to 11, characterized in that a retaining apparatus (12, 13) for limiting the weight of the bobbin tubes (2) acting on the conveyor belt (31) is arranged in the tube magazine (1).

13. Apparatus according to one of Claims 7 to 12, characterized in that a rotatably driven shaft (63) as an apparatus (6) for deflecting bobbin tubes (2) from a housing edge of the tube magazine (1) is associated with the removal point.

14. Apparatus according to Claim 13, characterized in that at least one eccentric for loosening the bobbin tubes (2) to be singled out is arranged on the shaft (63).

15. Apparatus according to one of Claims 7 to 14, characterized in that the movements of the conveyor belt (31) and/or of the deflecting apparatus (6) are synchronized with respect to the movements of the removal apparatus.

16. Apparatus according to one of Claims 7 to 15, characterized in that a vertical conveyor (5) having compartments (51) for individual bobbin tubes (2) is associated with the conveyor belt (31) as a removal apparatus.

17. Apparatus according to Claim 16, characterized in that the conveying speeds of conveyor belt (31) and vertical conveyor (5) are in a fixed transmission ratio with respect to one another.

18. Apparatus according to Claim 16 or 17, characterized in that a common drive is associated with the conveyor (3), the vertical conveyor (5) and/or the deflecting apparatus (6).

19. Apparatus according to Claim 18, characterized in that driving takes place pneumatically.

## Revendications

1. Procédé de stockage et de manipulation de bobinots dans un magasin à bobinots, les bobinots étant empilés en des couches superposées, et les bobinots d'au moins la couche la plus basse étant dissociés et enlevés du magasin à bobinots caractérisé par le fait que les bobinots de la couche la plus basse sont sollicités sur leur face inférieure par une bande convoyeuse rugueuse à fort coefficient de frottement, se déplaçant en direction de la zone de prélèvement, tandis qu'ils prennent appui contre les bobinots empilés au-dessus d'eux , de sorte que les bobinots sont soumis à l'action d'une force tangentielle de frottement ayant pour effet d'engendrer un mouvement de roulement des bobinots.

2. Procédé selon la revendication 1, caractérisé par le fait que la force tangentielle est développée par la bande convoyeuse sur laquelle les bobinots sont placés et dont le brin supérieur est mis en mouvement en direction de la zone de prélèvement.

3. Procédé selon l'une des revendications 1 ou 2, caractérisé par le fait que le coefficient de frottement du support est sélectionné en fonction du matériau constituant les bobinots.

4. Procédé selon l'une des revendications 1 à 3, caractérisé par le fait que la force maximale agissant sur les bobinots est limitée par un appui partiel des bobinots superposés, contre des systèmes de retenue.

5. Procédé selon l'une des revendications 1 à 4, caractérisé par le fait que le support est mis en fonction en synchronisme avec un système de prélèvement.

6. Procédé selon l'une des revendications 1 à 5, caractérisé par le fait que les bobinots sont maintenus par un déflecteur, éloignés de bords d'un boîtier.

7. Dispositif pour stocker des bobinots (2) dans un magasin à bobinots dans lequel les bobinots (2) de la couche la plus basse prennent appui contre les bobinots (2) empilés au-dessus d'eux , ainsi que pour dissocier les bobinots, comprenant une bande convoyeuse qui est implantée au-dessous des bobinots stockés, et dont le sens de défilement est orienté, pour l'essentiel, tangentiellement à la face supérieure des bobinots stockés ; et un système pour enlever du magasin à bobinots les bobinots dissociés, dans une zone de prélèvement, notamment pour la mise en oeuvre du procédé selon l'une des revendications 1 à 6, caractérisé par le fait que la bande convoyeuse (31) présente une face supérieure rugueuse qui est en contact avec la couche la plus basse des bobinots (2), est mobile en direction de la zone de prélèvement, est dotée d'un fort coefficient de frottement et applique une force de frottement tangentiellement aux faces supérieures des bobinots (2) de la couche la plus basse, de sorte que les bobinots (2) roulent pour l'essentiel.

8. Dispositif selon la revendication 6 ou 7, caractérisé par le fait que le brin supérieur de la bande convoyeuse (31) est agencé avec inclinaison en direction de la zone de prélèvement.

9. Dispositif selon la revendication 8, caractérisé par le fait que l'inclinaison de la bande convoyeuse (31) est inférieure à 10°.

10. Dispositif selon l'une des revendications 7 à 9, caractérisé par le fait qu'une force de frottement, agissant entre la bande convoyeuse (31) et les bobinots (2), est inférieure à la force de destruction des bobinots (2) et est supérieure à une force maximale de retenue pouvant être appliquée, par le poids des bobinots (2) stockés, aux bobinots (2) de la couche la plus basse.

11. Dispositif selon l'une des revendications 7 à 10, caractérisé par le fait que le coefficient de frottement de la face supérieure de la bande convoyeuse (31) est compris entre 0,5 et 0,8.

12. Dispositif selon l'une des revendications 7 à 11, caractérisé par le fait qu'un système de retenue (12, 13), conçu pour limiter le poids des bobinots (2) agissant sur la bande convoyeuse (31), est logé dans le magasin (1) à bobinots.

13. Dispositif selon l'une des revendications 7 à 12, caractérisé par le fait qu'un arbre (63) entraîné en rotation est affecté, à la zone de prélèvement, en tant que système (6) déflecteur de bobinots (2) pour les éloigner d'un bord du boîtier du magasin (1) à bobinots.

14. Dispositif selon la revendication 13, caractérisé par le fait qu'au moins un excentrique est calé sur l'arbre (63), pour donner du jeu aux bobinots (2) devant être dissociés.

15. Dispositif selon l'une des revendications 7 à 14, caractérisé par le fait que les mouvements de la bande convoyeuse (31) et/ou du système déflecteur (6) sont synchronisés par rapport aux mouvements du système de prélèvement.

16. Dispositif selon l'une des revendications 7 à 15, caractérisé par le fait qu'un convoyeur vertical (5), muni de casiers (51) destinés à des bobinots (2) individuels, est associé à la bande convoyeuse (31) en tant que système de prélèvement.

17. Dispositif selon la revendication 16, caractérisé par le fait que les vitesses de convoyage de la bande convoyeuse (31) et du convoyeur vertical (5) présentent, mutuellement, un rapport de démultiplication fixe.

18. Dispositif selon la revendication 16 ou 17, caractérisé par le fait qu'un entraînement commun est affecté au convoyeur (3), au convoyeur vertical (5) et/ou au système déflecteur (6).

19. Dispositif selon la revendication 18, caractérisé par le fait que l'entraînement est assuré pneumatiquement.
